# EUROPÄISCHE PATENTSCHRIFT

(11) **EP 1 263 795 B1**
(45) Veröffentlichungstag und Bekanntmachung des Hinweises auf die Patenterteilung: **15.09.2004**
(21) Anmeldenummer: 01929410.7
(22) Anmeldetag: 06.03.2001
(51) Int. Cl.: C08F 2/06

(54) **VERFAHREN ZUR HERSTELLUNG VON POLYMEREN**
METHOD FOR PRODUCING POLYMERS
PROCEDE DE PRODUCTION DE POLYMERES

(30) Priorität: 08.03.2000 DE 10010811
(43) Veröffentlichungstag der Anmeldung: 11.12.2002
(73) Patentinhaber: BASF AKTIENGESELLSCHAFT, 67056 Ludwigshafen (DE)
(72) Erfinder: ANGEL, Maximilian, 67105 Schifferstadt (DE); STEIN, Stefan, 55286 Wörrstadt (DE); NEUBECKER, Karin, 67227 Frankenthal (DE)
(86) Internationale Anmeldenummer: PCT/EP2001/002493
(87) Internationale Veröffentlichungsnummer: WO 2001/066602

(56) Entgegenhaltungen:
- EP-A- 0 694 565
- WO-A-93/07188
- FR-A- 2 305 444

## Beschreibung

Die Erfindung liegt auf dem Gebiet der Polymerisationsreaktionen und betrifft ein Verfahren zur Herstellung von Polymeren durch radikalische Polymerisation sowie deren Verwendung als Gashydratinhibitoren.

Bei Polymerisationsreaktionen (= Polymerisationen) werden aus Monomeren, die reaktive Mehrfachbindungen enthalten, Polymere stufenlos gebildet. Bei der radikalischen Polymerisation wird die Polymerisation durch Einwirkung von radikalischen Initiatoren gestartet. Dabei werden die Initiatoren üblicherweise in demselben Lösungsmittel wie die Monomere gelöst und die Reaktion wird dann durch einstufige, mehrstufige oder kontinuierliche Zugabe des Initiators zu den Monomeren vorangetrieben. Die begrenzte Löslichkeit einer Vielzahl von gängigen Initiatoren stellt dabei eine wesentliche Einschränkung der bekannten Verfahren dar. Vielfach ist für die endgültige Verwendung der Polymere ein spezielles Lösungsmittel erwünscht, in dem die Initiatoren nicht löslich sind. Dies macht den technisch aufwendigen und kostenintensiven Austausch des Lösungsmittels nach erfolgter Polymerisation erforderlich. Ein denkbarer direkter Einsatz der Initiatoren (in unverdünnter, flüssiger oder fester Form oder als Dispersion) ist in vielen Fällen aus Sicherheitsgründen (z.B. Gefahr der Entmischung) nicht realisierbar. Gleiche Einwände gelten für den Einsatz von Initiator-Emulsionen aufgrund der Gefahr einer Entmischung.

Eine wichtige Kenngröße für Polymere (die in Form von Polymerlösungen und/oder Dispersionen vorliegen können) ist ihr Flammpunkt. Insbesondere bei Polymeren, die über weite Strecken vom Produktionsstandort bis zum Einsatzort transportiert werden müssen, ist ein hoher Flammpunkt aus sicherheitstechnischen Gründen erwünscht.

Die Aufgabe der vorliegenden Erfindung hat somit darin bestanden, ein Verfahren zur Verfügung zu stellen, welches es ermöglicht, Polymere zu erhalten, ohne in der Wahl des Initiators durch dessen Löslichkeit eingeschränkt zu sein. Weiterhin sollte das erfindungsgemäße Verfahren technisch einfach, sowie auch unter erhöhten Sicherheitsauflagen, insbesondere großtechnisch, durchführbar sein. Von besonderem Interesse war es, dabei gleichzeitig Polymere zu erhalten, die einen hohen Flammpunkt aufweisen.

Diese Aufgabe wird gelöst durch ein Verfahren, bei dem man die Monomere und den Initiator in jeweils unterschiedlichen Lösungsmitteln vorlegt und das Lösungsmittel des Initiators nach Beendigung der Polymerisation praktisch vollständig abtrennt.

Durch dieses Verfahren ist es möglich, auf technisch einfache Weise Polymere in einem gewünschten Lösungsmittel mit einem gewünschten (hohen) Flammpunkt zu erhalten und gleichzeitig den Einsatz von unverdünnten festen oder flüssigen bzw. pulverförmigem Initiator(en) zu vermeiden.

Gegenstand der Erfindung ist demnach ein Verfahren zur Herstellung von Polymeren, bei dem man die Monomere in einem Lösungsmittel 1 und den radikalischen Polymerisationsinitiator in einem Lösungsmittel 2 vorlegt, wobei Lösungsmittel 1 verschieden von Lösungsmittel 2 ist und bei dem man nach Abschluß der Polymerisationsreaktion Lösungsmittel 2 unter einen Gehalt von 5 Gew.-%, bezogen auf das Polymer, aus den Polymeren entfernt.

Unter dem Begriff Polymere im Sinne der vorliegenden Erfindung werden sowohl Polymerlösungen als auch Polymerdispersionen verstanden.

Die erfindungsgemäß herzustellenden Polymere umfassen dabei sowohl Co- als auch Homopolymere von gängigen Monomeren:

Vinylester von aliphatischen, gesättigten oder ungesättigten C₁-C₂₄-Carbonsäuren, wie z.B. Ameisensäure, Essigsäure, Propionsäure, Buttersäure, Valeriansäure, Isovaleriansäure, Capronsäure, Caprylsäure, Caprinsäure, Undecylensäure, Laurinsäure, Myristinsäure, Palmitinsäure, Palmitoleinsäure, Stearinsäure, Ölsäure, Arachinsäure, Behensäure, Lignocerinsäure, Cerotinsäure sowie Melissensäure.

Bevorzugt werden Vinylester der oben genannten C₁-C₁₂-Carbonsäuren, insbesondere der C₁-C₆-Carbonsäuren, verwendet. Ganz besonders bevorzugt ist Vinylacetat.

Ethylenisch ungesättigte Monomere können durch die folgende allgemeine Formel (I) beschrieben werden:

X-C(O)CR²=CHR¹ (I)

wobei
X ausgewählt ist aus der Gruppe der Reste -OH, -OM, -OR³, NH₂, -NHR³, N(R³)₂;
M ist ein Kation ausgewählt aus der Gruppe bestehend aus: Na⁺, K⁺, Mg⁺⁺, Ca⁺⁺, Zn⁺⁺, NH₄⁺, Alkylammonium, Dialkylammonium, Trialkylammonium und Tetraalkylammonium;
die Reste R³ können identisch oder verschieden ausgewählt werden aus der Gruppe bestehend aus -H, C₁-C₄₀ linear- oder verzweigtkettige Alkylreste, N,N-Dimethylaminoethyl, 2-Hydroxyethyl, 2-Methoxyethyl, 2-Ethoxyethyl, Hydroxypropyl, Methoxypropyl oder Ethoxypropyl.

R² und R¹ sind unabhängig voneinander ausgewählt aus der Gruppe bestehend aus: -H, C₁-C₈ linear- oder verzweigtkettige Alkylketten, Methoxy, Ethoxy, 2-Hydroxyethoxy, 2-Methoxyethoxy und 2-Ethoxyethyl.

Repräsentative aber nicht limitierende Beispiele von geeigneten Monomeren sind zum Beispiel Acrylsäure oder Methacrylsäure und deren Salze, Ester und Amide. Die Salze können von jedem beliebigen nicht toxischen Metall, Ammonium oder substituierten Ammonium-Gegenionen abgeleitet sein.

Die Ester können abgeleitet sein von C₁-C₄₀ linearen, C₃-C₄₀ verzweigtkettigen oder C₃-C₄₀ carbocyclischen Alkoholen, von mehrfachfunktionellen Alkoholen mit 2 bis etwa 8 Hydroxylgruppen wie Ethylenglycol, Hexylenglycol, Glycerin und 1,2,6-Hexantriol, von Aminoalkoholen oder von Alkoholethern wie Methoxyethanol und Ethoxyethanol, (Alkyl)Polyethylenglykolen, (Alkly)Polypropylenglykolen oder ethoxylierten Fettalkoholen, beispielsweise C₁₂-C₂₄-Fettalkoholen umgesetzt mit 1 bis 200 Ethylenoxid-Einheiten.

Ferner eignen sich N,N-Dialkylaminoalkylacrylate- und -methacrylate und N-Dialkylaminoalkylacryl- und -methacrylamide der allgemeinen Formel (II) 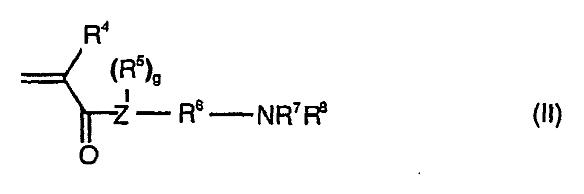 mit
- R⁴ =: H, Alkyl mit 1 bis 8 C-Atomen,
- R⁵ =: H, Methyl,
- R⁶ =: Alkylen mit 1 bis 24 C-Atomen, optional substituiert durch Alkyl,
- R⁷, R⁸ =: C₁-C₄₀ Alkylrest,
- Z =: Stickstoff für g = 1 oder Sauerstoff für g = 0.

Die Amide können unsubstituiert, N-Alkyl oder N-Alkylamino monosubstituiert oder N,N-dialkylsubstituiert oder N,N-dialkylaminodisubstituiert vorliegen, worin die Alkyl- oder Alkylaminogruppen von C₁-C₄₀ linearen, C₃-C₄₀ verzweigtkettigen, oder C₃-C₄₀ carbocyclischen Einheiten abgeleitet sind. Zusätzlich können die Alkylaminogruppen quaternisiert werden.

Bevorzugte Monomere der Formel (II) sind N,N-Dimethylaminomethyl(meth)acrylat, N,N-Diethylaminomethyl(meth)acrylat, N,N-Dimethylaminoethyl(meth)acrylat, N,N-Diethylaminoethyl-(meth)acrylat, N-[3-(dimethylamino)propyl]methacrylamid und N-[3-(dimethylamino)propyl]acrylamid.

Ebenfalls verwendbare Monomere sind substituierte Acrylsäuren sowie Salze, Ester und Amide davon, wobei die Substituenten an den Kohlenstoffatomen in der zwei oder drei Position der Acrylsäure stehen, und unabhängig voneinander ausgewählt sind aus der Gruppe bestehend aus C₁-C₄ Alkyl, -CN, COOH besonders bevorzugt Methacrylsäure, Ethacrylsäure und 3-Cyanoacrylsäure. Diese Salze, Ester und Amide dieser substituierten Acrylsäuren können wie oben für die Salze, Ester und Amide der Acrylsäure beschrieben ausgewählt werden.

Andere geeignete Monomere sind Allylester von C₁-C₄₀ linearen, C₃-C₄₀ verzweigtkettigen oder C₃-C₄₀ carbocyclische Carbonsäuren, Vinyl- oder Allylhalogenide, bevorzugt Vinylchlorid und Allylchlorid, Vinylether, bevorzugt Methyl-, Ethyl-, Butyl- oder Dodecylvinylether, Vinylformamid, Vinylmethylacetamid, Vinylamin; Vinyllactame, bevorzugt Vinylpyrrolidon und Vinylcaprolactam, Vinyl- oder Allyl-substituierte heterocyclische Verbindungen, bevorzugt Vinylpyridin, Vinyloxazolin und Allylpyridin.

Weiterhin sind N-Vinylimidazole der allgemeinen Formel (III) geeignet, worin R⁹ bis R¹¹ unabhängig voneinander für Wasserstoff, C₁-C₄-Alkyl oder Phenyl steht:

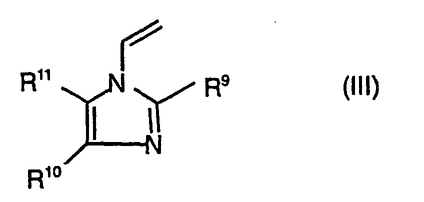

Weitere geeignete Monomere sind Diallylamine der allgemeinen Formel (IV) 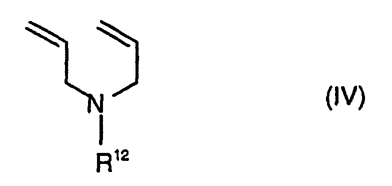 mit
- R¹² =: C₁- bis C₂₄-Alkyl.

Weitere geeignete Monomere sind Vinylidenchlorid; und Kohlenwasserstoffe mit mindestens einer Kohlenstoff-Kohlenstoff Doppelbindung, bevorzugt Styrol, alpha-Methylstyrol, tert.-Butylstyrol, Butadien, Isopren, Cyclohexadien, Ethylen, Propylen, 1-Buten, 2-Buten, Isobutylen, Vinyltoluol, sowie Mischungen dieser Monomere.

Besonders geeignete Monomere sind Acrylsäure, Methacrylsäure, Ethylacrylsäure, Methylacrylat, Ethylacrylat, Propylacrylat, n-Butylacrylat, iso-Butylacrylat, t-Butylacrylat, 2-Ethylhexylacrylat, Decylacrylat, Methylmethacrylat, Ethylmethacrylat, Propylmethacrylat, n-Butylmethacrylat, iso-Butylmethacrylat, t-Butylmethacrylat, 2-Ethylhexylmethacrylat, Decylmethacrylat, Methylethacrylat, Ethylethacrylat, n-Butylethacrylat, iso-Butylethacrylat, t-Butyl-ethacrylat, 2-Ethylhexylethacrylat, Decylethacrylat, Stearyl(meth)acrylat, 2,3-Dihydroxypropylacrylat, 2,3-Dihydroxypropylmethacrylat, 2-Hydroxyethylacrylat, Hydroxypropylacrylate, 2-Hydroxyethylmethacrylat, 2-Hydroxyethylethacrylat, 2-Methoxyethylacrylat, 2-Methoxyethylmethacrylat, 2-Methoxyethylethacrylat, 2-Ethoxyethylmethacrylat, 2-Ethoxyethylethacrylat, Hydroxypropylmethacrylate, Glycerylmonoacrylat, Glycerylmonomethacrylat, Polyalkylenglykol(meth)acrylate, ungesättigte Sulfonsäuren wie zum Beispiel Acrylamidopropansulfonsäure; Acrylamid, Methacrylamid, Ethacrylamid, N-Methylacrylamid, N,N-Dimethylacrylamid, N-Ethylacrylamid, N-Isopropylacrylamid, N-Butylacrylamid, N-t-Butylacrylamid, N-Octylacrylamid, N-t-Octylacrylamid, N-Octadecylacrylamid, N-Phenylacrylamid, N-Methylmethacrylamid, N-Ethylmethacrylamid, N-Isopropylmethacrylamid, N-Dodecylmethacrylamid, 1-Vinylimidazol, 1-Vinyl-2-methylvinylimidazol, N,N-Dimethylaminomethyl(meth)acrylat, N,N-Diethylaminomethyl(meth)-acrylat, N,N-Dimethylaminoethyl(meth)acrylat, N,N-Diethylaminoethyl(meth)acrylat, N,N-Dimethylaminobutyl(meth)-acrylat, N,N-Diethylaminobutyl(meth)acrylat, N,N-Dimethylaminohexyl(meth)-acrylat, N,N-Dimethylaminooctyl(meth)acrylat, N,N-Dimethylaminododecyl(meth)acrylat, N-[3-(dimethylamino)propyl]methacrylamid, N-[3-(dimethylamino)propyl]acrylamid, N-[3-(dimethylamino)-butyl]methacrylamid, N-[8-(dimethylamino)octyl]methacrylamid, N-[12-(dimethylamino)dodecyl]methacrylamid, N-[3-(diethylamino)-propyl]methacrylamid, N-[3-(diethylamino)propyl]acrylamid; Besonders bevorzugt ist N-Isopropylmethacrylamid.

Maleinsäure, Fumarsäure, Maleinsäureanhydrid und seine Halbester, Crotonsäure, Itaconsäure, Diallyldimethylammoniumchlorid, Vinylether (zum Beispiel: Methyl-, Ethyl-, Butyl- oder Dodecylvinylether), Vinylformamid, N-Vinyl-N-Methylacetamid, Vinylamin; Methylvinylketon, Maleimid, Vinylpyridin, Vinylimidazol, Vinylfuran, Styrol, Styrolsulfonat, Allylalkohol, und Mischungen daraus. Besonders bevorzugt ist N-Vinyl-N-Methylacetamid.

Von diesen sind besonders bevorzugt Acrylsäure, Methacrylsäure, Maleinsäure, Fumarsäure, Crotonsäure, Maleinsäureanhydrid sowie dessen Halbester, Methylacrylat, Methylmethacrylat, Ethylacrylat, Ethylmethacrylat, n-Butylacrylat, n-Butylmethacrylat, t-Butylacrylat, t-Butylmethacrylat, Isobutylacrylat, Isobutylmethacrylat, 2-Ethylhexylacrylat, Stearylacrylat, Stearylmethacrylat, N-t-Butylacrylamid, N-Octylacrylamid, 2-Hydroxyethylacrylat, Hydroxypropylacrylate, 2-Hydroxyethylmethacrylat, Hydroxypropylmethacrylate, Alkylenglykol(meth)acrylate, Styrol, ungesättigte Sulfonsäuren wie zum Beispiel Acrylamidopropansulfonsäure, Vinylpyrrolidon, Vinylcaprolactam, Vinylether (z.B.: Methyl-, Ethyl-, Butyl- oder Dodecylvinylether), Vinylformamid, N-VinylN-Methylacetamid, Vinylamin, 1-Vinylimidazol, 3-Vinyl-2-methylimidazol, N,N-Dimethylaminomethylmethacrylat und N-[3-(dimethylamino)-propyl]methacrylamid; 3-Methyl-l-vinylimidazoliumchlorid, 3-Methyl-l-vinylimidazoliummethylsulfat, N,N-Dimethylaminoethylmethacrylat, N-Isopropylmethacrylamid, N-[3-(dimethylamino)-propyl]methacrylamid quaternisiert mit Methylchlorid, Methylsulfat oder Diethylsulfat.

In einer besonders bevorzugten Ausführungsform werden Co- und/oder Homopolymere aus Vinyllactamen und/oder Vinylamiden hergestellt. In einer weiteren Ausführungsform enthalten die Co- und/oder Homopolymere aus Vinyllactamen und/oder Vinylamiden zusätzlich Methacrylate und/oder Acrylate. Diese werden in der Regel in einem Gewichtsbereich von 1 bis 40 Gew.-% -bezogen auf das Polymer- eingesetzt. In einer weiteren besonders bevorzugten Ausführungsform des erfindungsgemäßen Verfahrens werden Co- und/oder Homopolymere aus Vinylpyrrolidon und/oder Vinylcaprolactam hergestellt.

Als Lösungsmittel 1 (Lösungsmittel für die Monomere bzw. Monomerengemische) sind prinzipiell alle Lösungsmittel und deren Gemische geeignet, in denen die Monomere bzw. Monomerengemische löslich bzw. dispergierbar sind. Als Lösungsmittel 1 sind demnach auch Dispersionsmittel für Monomere zu verstehen. Sie können vom Fachmann in Abhängigkeit der eingesetzten Monomere frei gewählt werden. Das erfindungsgemäße Verfahren ermöglicht die Auswahl des Lösungsmittels 1 alleine von der Löslichkeit/Dispergierbarkeit der Monomere und dem endgültigen Verwendungszweck der Polymere abhängig zu machen. Erfindungswesentlich ist, daß eine Löslichkeit der Initiatoren bei der Auswahl des Lösungsmittels 1 nicht in Betracht gezogen werden muß.

In einer bevorzugten Ausführungsform der vorliegenden Erfindung ist das Lösungsmittel 1 so gewählt, daß sein Flammpunkt über 61°C, insbesondere über 100°C beträgt. Besonders bevorzugt im Sinne der vorliegenden Erfindung sind 1,2-Ethandiol (Ethylenglykol) mit einem Flammpunkt von 111°C sowie 1,2-Propandiol (Propylenglykol) mit einem Flammpunkt von 107°C.

Als Lösungsmittel 2 (Lösungsmittel für die Initiatoren bzw. Initiatorengemische) sind prinzipiell alle Lösungsmittel und deren Gemische geeignet, in denen die Initiatoren bzw. Initiatiorengemische löslich sind. Sie können vom Fachmann in Abhängigkeit der eingesetzten Initiatoren frei gewählt werden.

In einer bevorzugten Ausführungsform ist das Lösungsmittel 2 so gewählt, das sein Flammpunkt unter 61°C, insbesondere unter 35°C, insbesondere unter 20°C liegt. In einer Ausführungsform der vorliegenden Erfindung liegt der Flammpunkt des Lösungsmittels 2 mindestens 50°C, insbesondere mindestens 70°C unter dem Flammpunkt des Lösungsmittels 1.

Besonders geeignet als Lösungsmittel 2 sind Methanol mit einem Flammpunkt von 11°C, Ethanol (12°C), Isopropanol (12°C), Essigsäureethylester (- 4°C), Aceton (- 18°C), 1-Butanol (29°C), 2-Butanol (24°C), iso-Butanol (28°C), Cyclohexan (-17°C), Tetrahydrofuran (-18°C), Toluol (4°C). Bevorzugt als Lösungsmittel 2 sind Methanol, Ethanol sowie Isopropanol.

Die vorliegende Erfindung umfaßt die Erkenntnis, daß es bevorzugt ist, als Lösungsmittel 1 und 2 solche Lösungsmittel zu wählen, die miteinander homogen mischbar sind. Weiterhin umfaßt die vorliegende Erfindung die Erkenntnis, daß es bevorzugt ist, Lösungsmittel 1 und 2 so zu wählen, daß ein Abtrennen des Lösungsmittels 2 aus dem Reaktionsansatz nach abgeschlossener Polymerisation durch Destillation einfach möglich ist.

Als mögliche Lösungsmittel 1 und/oder 2 seien beispielsweise genannt:
Methanol, Ethanol, Isopropanol, n-Propanol, tertiär-Butanol, n-Butanol, sekundär-Butanol und höhere geradkettige, verzweigte oder zyklische Monoalkohole; Ethylenglykol, Propylenglykol, Glyzerin und höhere geradkettige, verzweigte oder zyklische Di-, Tri- oder polyfunktionelle Alkohole; Diethylenglykol, Triethylenglykol und höhere aus Ethylenoxid und Propylenoxid-einheiten bestehende Homologe; n-Hexan, n-Heptan, Cyclohexan, Isooktan und höhere geradkettige, verzweigte oder zyklische Alkane; Benzol, Toluol, Ethylbenzol, Xylol und höhere Alkylbenzole; Phenol, Kresol, Resorcin und höhere mono- und difunktionelle (Alkyl)benzole; Aceton, Methyl-ethylketon, Acetophenon, Cyclohexanon und höhere geradkettige, verzweigte oder zyklische aliphatische und aromatische Ketone; Dimethylformamid, Dimethylacetamid, N-Methylpyrrolidon, N-Ethyl-pyrrolidon, Dimethylsulfoxid und andere übliche organische Lösungsmittel. Prinzipiell ebenfalls geeignet sind natürliche oder synthetische Wachse, Öle, Fette und Emulgatoren die unter den Polymerisationsbedingungen flüssig sind - sowohl als solche als auch im Gemisch mit den oben angeführten organischen Lösungsmitteln oder mit Wasser.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.butylperoxid, tert.-Butylperbenzoat, tert.-Butylperpivalat, tert.-Butylpermaleinat, Cumolhydroperoxid (=α,α-Dimethylbenzylhydroperoxid), Diisopropylperoxidicarbamat, Bis-(o-toluoyl)-peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, Azobis-(2-amidonopropan)dihydrochlorid, 2-2'-Azo-bis-(2-methyl-butyronitril), Dicumylperoxid (=Bis(1-methyl-2-phenylethyl)peroxid) oder tert.-Butyldicumylperoxid. Geeignet sind auch Initiatormischungen oder Redox-Initiator-Systeme, wie z.B. Ascorbinsäure/Eisen(II)sulfat/Natriumperoxodisulfat, tert.-Butylhydroperoxid / Natriumdisulfit, tert.-Butylhydroperoxid/Natriumhydroxymethansulfinat.

Bevorzugt werden organische Peroxide eingesetzt, insbesondere Di-tert.-Butylperoxid und tert.-Butylperoctoat.

### Verfahrensdurchführung

Das zu polymerisierende Monomer (oder Monomerengemisch) wird in Lösungsmittel 1 gelöst oder dispergiert. Der Initiator wird in Lösungsmittel 2 gelöst. Die Menge an Initiator bzw. Initiatorgemischen bezogen auf die Menge an eingesetzten Monomeren liegt in der Regel zwischen 0,01 und 10 Gew.-%, vorzugsweise zwischen 0,1 und 5 Gew.-%. Die Konzentration der eingesetzten Initiatorlösung liegt vorteilhafterweise bei unter 50 Gew.-%, insbesondere unter 20 Gew.-%. Ganz besonders bevorzugt ist der Einsatz einer Initiatorlösung in einer Konzentration von 1 bis 10 Gew.-%. Die Einstellung der gewünschten Konzentration der Initiatorlösung erfolgt dabei üblicherweise durch Verdünnen mit Lösungsmittel 2. In einer bevorzugten Ausführungsform der vorliegenden Erfindung wird der Polymerisationsinitiator in Lösungsmittel 2 gelöst und anschließend mit Lösungsmittel 1 auf die gewünschte Konzentration verdünnt und dann zu den Monomeren gegeben.

Die Zugabe der Initiatorlösung zur Monomerlösung bzw. Monomerdispersion kann einstufig, mehrstufig oder kontinuierlich erfolgen.

In einer bevorzugten Ausführungsform der vorliegenden Erfindung werden dem Reaktionsansatz keine weiteren Einsatzstoffe zugegeben. Die vorliegende Erfindung umfaßt jedoch auch Verfahren bei denen dem Reaktionsansatz weitere Einsatzstoffe, wie beispielsweise Regler, Emulgatoren, Schutzkolloide und/oder Salz zugegeben werden. Üblicherweise werden diese Einsatzstoffe über die Monomerenlösung bzw. Monomerendispersion zugegeben, ebenso möglich, wenn auch weniger bevorzugt ist ein direkter Zusatz oder eine Zugabe zusammen mit der Initiatorlösung.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 Al, Emulan® NP 50, Dextrol® OC 50, Emulgator 825, Emulgator 825 S, Emulan® OG, Texapon® NSO, Nekanil® 904 S, Lumiten® I-RA, Lumiten E 3065 etc.

Die grenzflächenaktive Substanz wird üblicherweise in Mengen von 0,1 bis 10 Gew.-%, bezogen auf alle zu polymerisierenden Monomeren verwendet.

Als Regler sind beispielsweise geeignet: Formaldehyd, Acetaldehyd, Propionaldehyd, n-Butyraldehyd und Isobutyraldehyd, Ameisensäure, Ammoniumformiat, Hydroxylammoniumsulfat, Hydroxylammoniumphosphat, Di-n-butylsulfid, Di-n-octylsulfid, Diphenylsulfid, Diisopropyldisulfid, Di-n-butyldisulfid, Di-n-hexyldisulfid, Diacetyldisulfid, Di-t-butyltrisulfid, n-Butylmercaptan, n-Hexylmercaptan, n-Dodecylmercaptan, t-Dodecylmercaptan, Ethylthioglycolat, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Diethanolsulfid, Thiodiglycol, Ethylthioethanol, Thioharnstoff, Allylalkohol, Allylbromid, Benzylchlorid, Chloroform, Tetrachlormethan.

Die Polymerisation kann mittels eines Batchverfahrens oder eines (halb)kontinuierlichen Zulaufverfahrens durchgeführt werden. Die Polymerisation erfolgt in der Regel im Temperaturbereich von 40 bis 200°C, bevorzugt im Bereich von 60 bis 170°C, besonders bevorzugt im Bereich von 85 bis 150°C, insbesondere im Bereich zwischen 120 und 140°C. Sie wird üblicherweise unter atmosphärischem Druck durchgeführt, kann jedoch auch unter vermindertem oder erhöhtem Druck, vorzugsweise zwischen 1 und 10 bar, ablaufen. Nach Abschluß der Polymerisation wird das Lösungsmittel 2 aus dem Reaktionsansatz praktisch vollständig entfernt. Unter "praktisch vollständig" wird im Sinne der vorliegenden Erfindung eine Entfernung auf unter 5 Gew.-%, insbesondere auf unter 1 Gew.-% - bezogen auf das Polymer - verstanden. Das Polymer kann dabei in Form einer Dispersion oder bevorzugt in Form einer Lösung vorliegen. Die Gewichtsangabe bezieht sich auf das Gesamtgewicht der Dispersion bzw. Lösung. Das Lösungsmittel 2 kann aus dem Reaktionsansatz nach allen dem Fachmann bekannten Methoden abgetrennt werden, beispielsweise durch Destillation, durch kontinuierliches bzw. einmaliges oder mehrmaliges Durchleiten von Dampf, gegebenenfalls unter Anlegen eines Vakuums, sowie auch durch Durchleiten von Gasen, wie beispielsweise Stickstoff.

In einer vorteilhaften Ausführungsform der vorliegenden Erfindung liegen die Flammpunkte des Lösungsmittels 1 und des Lösungsmittels 2 um mindestens 50°C, insbesondere um mindestens 70°C, auseinander.
Der Flammpunkt wird nach DIN EN 22719 bestimmt.

Die nach dem erfindungsgemäßen Verfahren hergestellten Polymere (Lösungen bzw. Dispersionen) weisen somit einen Flammpunkt auf, der nahe bei dem Flammpunkt des Lösungsmittels 1 liegt. In einer bevorzugten Ausführungsform der vorliegenden Erfindung hat das nach dem erfindungsgemäßen Verfahren hergestellte Polymer einen Flammpunkt von über 61°C.

Der Feststoffgehalt der nach dem erfindungsgemäßen Verfahren hergestellten Polymere (Lösungen bzw. Dispersionen) liegt in der Regel zwischen 10 bis 60, insbesondere zwischen 20 bis 50, besonders bevorzugt zwischen 30 und 40 Gew.-% und kann gegebenenfalls durch Verdünnung mit Lösungsmittel 1 auf den gewünschten Wert eingestellt werden.

Die K-Werte der Polymere liegen in der Regel im Bereich von 10 bis 100, bevorzugt 10 bis 35. Der jeweils gewünschte K-Wert läßt sich in an sich bekannter Weise durch die Zusammensetzung der Einsatzstoffe einstellen. Die K-Werte werden bestimmt nach Fikentscher, Cellulosechemie, Bd. 13, S. 58 bis 64, und 71 bis 74 (1932) in Ethanol bei 25°C und Polymerkonzentrationen, die je nach K-Wert-Bereich zwischen 0,1 Gew.-% und 5 Gew.-% liegen.

Die nach dem erfindungsgemäßen Verfahren hergestellten Polymere eignen sich für eine Vielzahl technischer Anwendungen.

Es ist bekannt, daß sich in Medien, die Gasmoleküle wie CO₂ oder Kohlenwasserstoffe, z.B. C₁-C₄ Alkane, und Wasser enthalten, unter bestimmten Bedingungen Gashydrate, auch als Clathrathydrate bezeichnet, bilden können. Diese Gashydrate bestehen aus den genannten Gasmolekülen, die von einem "Käfig" aus Wassermolekülen umgeben sind. Solchen Gashydrate treten auch in Wasser-enthaltenden Erdöl- oder Erdgasmischungen auf und können so z.B. beim Transport zu Verstopfungen der Pipelines führen. Um dies zu verhindern werden den Erdöl- oder Erdgasmischungen Gashydratinhibitoren zugesetzt. Überraschender weise wurde festgestellt, daß die nach dem erfindungsgemäßen Verfahren hergestellten Polymere sich in vorteilhafter Weise als Gasinhydratinhibitoren eignen.

Ein weiterer Gegenstand der vorliegenden Erfindung betrifft demnach die Verwendung der nach dem erfindungsgemäßen Verfahren hergestellten Polymere als Gashydratinhibitoren. Hierbei sind solche Polymere bevorzugt, die in Form von Lösungen vorliegen und die einen Flammpunkt von über 61 °C aufweisen.

### Beispiel

### Herstellung eines Copolymers aus Vinylcaprolactam und Vinylpyrrolidon

### Versuchanordnung: 6 l Juvokessel mit 4 Zulaufeinheiten und einem Rückflußkühler

Die Monomere (242,44 g Vinylcaprolactam, 80,86 g Vinylpyrrolidon) wurden in 170,49 g Ethylenglykol gelöst (= Zulauf 1). Der Starter (9,74 g Di.-tert.-Butylperoxid) wurde in 40,50 g i-Propanol gelöst und anschließend mit 47,18 g Ethylenglykol verdünnt (= Zulauf 2). Die Vorlage (267,35 g Ethylenglykol) wurde evakuiert, einmal mit 5 bar Stickstoff abgepresst und nochmals evakuiert. Dann wurden 111,50 g Zulauf 1 bei Raumtemperatur in die Vorlage zugegeben, danach wurde 0,5 bar Stickstoff auf den Polymerisationskessel aufgepresst und unter Rühren mit 50 U/min auf 130°C aufgeheizt. Bei einer Temperatur von 128°C erfolgte die Zugabe von 64,71 g Zulauf 2. Nach dem Anspringen der Reaktion wurde mit dem Zulauf der Restmengen 1 und 2 begonnen, der Zulauf 1 wurde in 3 h, der Zulauf 2 in 5 h zudosiert. Anschließend wurde 12 h bei 130°C nachpolymerisiert. Danach wurde bei einer Außentemperatur des Kessels von 130°C über einen Kühler entspannt. Ein Vakuum von maximal -800 mbar wurde langsam eingestellt und das Isopropanol aus dem Reaktionsgemisch abdestilliert.

Der Feststoffgehalt der Polymerlösung wurde durch Zugabe von Ethylenglykol auf 40 Gew.-% eingestellt, danach wurde die Lösung über ein 400 µ Filter abgelassen.

Die Polymerlösung hatte einen Feststoffgehalt von 40,4 Gew.-% und einen K-Wert (5 %ig in Ethanol) von 23,9, Der Anteil an Isopropanol betrug 7000 ppm (= 0,7 Gew.-%). Der Flammpunkt der Polymerlösung betrug 81°C.

## Patentansprüche

1. Verfahren zur Herstellung von Polymeren, **dadurch gekennzeichnet, daß** die Monomere in einem Lösungsmittel 1 und der radikalische Polymerisationsinitiator in einem Lösungsmittel 2 vorgelegt werden, wobei Lösungsmittel 1 verschieden von Lösungsmittel 2 ist und daß nach Abschluß der Polymerisationsreaktion Lösungsmittel 2 unter einen Gehalt von 5 Gew.-%, bezogen auf das Polymer, aus den Polymeren entfernt wird.

2. Verfahren nach Anspruch 1, **dadurch gekennzeichnet, daß** als Lösungsmittel 1 ein Lösungsmittel mit einem Flammpunkt von über 61°C, vorzugsweise über 100°C, eingesetzt wird.

3. Verfahren nach mindestens einem der vorgenannten Ansprüche, **dadurch gekennzeichnet, daß** als Lösungsmittel 2 eine Lösungsmittel mit einem Flammpunkt von unter 61°C, vorzugsweise unter 35°C, insbesondere von unter 20°C, eingesetzt wird.

4. Verfahren nach mindestens einem der vorgenannten Ansprüche, **dadurch gekennzeichnet, daß** man den Polymerisationsinitiator in Lösungsmittel 2 löst, anschließend mit Lösungsmittel 1 verdünnt und dann zu den Monomeren gibt.

5. Verfahren nach mindestens einem der vorgenannten Ansprüche, **dadurch gekennzeichnet, daß** die Monomere ausgewählt sind aus der Gruppe, die gebildet wird von Vinyllactamen, Vinylamiden, Acrylaten, Methacrylaten, Acrylamiden und Methacrylamiden.

6. Verfahren nach Anspruch 5, **dadurch gekennzeichnet, daß** als Vinyllactam Vinylpyrrolidon und/oder Vinylcaprolactam eingesetzt werden.

7. Verfahren nach Anspruch 6, **dadurch gekennzeichnet, daß** als Vinylamid N-Vinyl-N-Methyl-Acetamid eingesetzt wird.

8. Verfahren nach Anspruch 6, **dadurch gekennzeichnet, daß** als Methacrylamid N-Isopropylmethacrylamid eingesetzt wird.

9. Verfahren nach mindestens einem der vorgenannten Ansprüche, **dadurch gekennzeichnet, daß** man die Reaktion einstufig, mehrstufig oder kontinuierlich durchführt.

10. Verwendung der nach Anspruch 1 hergestellten Polymere als Gashydratinhibitoren.

11. Verwendung nach Anspruch 11, **dadurch gekennzeichnet, daß** die Polymere einen Flammpunkt von über 61°C aufweisen.

## Claims

1. A process for preparing polymers which comprises introducing the monomers in a solvent 1 and the free radical polymerization initiator in a solvent 2, solvent 1 being different from solvent 2, and removing solvent 2 to a level of below 5% by weight based on the polymer from the polymers after the end of the polymerization reaction.

2. A process as claimed in claim 1, wherein solvent 1 is a solvent having a flash point of more than 61°C, preferably more than 100°C.

3. A process as claimed in either of the preceding claims, wherein solvent 2 is a solvent having a flash point of less than 61°C, preferably less than 35°C, in particular less than 20°C.

4. A process as claimed in at least one of the preceding claims, wherein the polymerization initiator is dissolved in solvent 2, diluted with solvent 1, and then added to the monomers.

5. A process as claimed in at least one of the preceding claims, wherein the monomers are selected from the group consisting of vinyllactams, vinylamides, acrylates, methacrylates, acrylamides, and methacrylamides.

6. A process as claimed in claim 5, wherein vinylpyrrolidone and/or vinylcaprolactam are/is used as vinyllactam.

7. A process as claimed in claim 5, wherein N-vinyl-N-methylacetamide is used as vinylamide.

8. A process as claimed in claim 5, wherein N-isopropylmethacrylamide is used as methacrylamide.

9. A process as claimed in at least one of the preceding claims, wherein the reaction is conducted in one stage, in two or more stages or continuously.

10. The use of polymers prepared as claimed in claim 1 as gas hydrate inhibitors.

11. The use as claimed in claim 10, wherein the polymers have a flash point of more than 61°C.

## Revendications

1. Procédé de production de polymères, **caractérisé en ce que** les monomères sont chargés dans un solvant 1 et l'initiateur de polymérisation radicalaire dans un solvant 2, le solvant 1 étant différent du solvant 2, et **en ce que**, au terme de la réaction de polymérisation, le solvant 2 est éliminé des polymères jusqu'à une teneur inférieure à 5% en poids, par rapport aux polymères.

2. Procédé selon la revendication 1, **caractérisé en ce que** l'on met en oeuvre en tant que solvant 1 un solvant d'un point d'inflammation de plus de 61 °C, de préférence de plus de 100°C.

3. Procédé selon l'une au moins des revendications qui précèdent, **caractérisé en ce que** l'on met en oeuvre en tant que solvant 2 un solvant d'un point d'inflammation de moins de 61 °C, de préférence de moins de 35°C, en particulier de moins de 20°C.

4. Procédé selon l'une au moins des revendications qui précèdent, **caractérisé en ce que** l'on dissout l'initiateur de polymérisation dans le solvant 2, on le dilue ensuite avec le solvant 1 et on l'ajoute alors aux monomères.

5. Procédé selon l'une au moins des revendications qui précèdent, **caractérisé en ce que** les monomères sont choisis dans le groupe formé par des vinyllactames, des vinylamides, des acrylates, des méthacrylates, des acrylamides et des méthacrylamides.

6. Procédé selon la revendication 5, **caractérisé en ce que** l'on met en ceuvre en tant que vinyllactame de la vinylpyrrolidone et/ou du vinylcaprolactame.

7. Procédé selon la revendication 6, **caractérisé en ce que** l'on met en oeuvre en tant que vinylamide du N-vinyl-N-méthylacétamide.

8. Procédé selon la revendication 6, **caractérisé en ce que** l'on met en oeuvre en tant que méthacrylamide du N-isopropylméthacrylamide.

9. Procédé selon l'une au moins des revendications qui précèdent, **caractérisé en ce que** l'on entreprend la réaction en une étape, en plusieurs étapes ou en continu.

10. Utilisation des polymères préparés selon la revendication 1 comme inhibiteurs d'hydrates de gaz.

11. Utilisation selon la revendication 11, **caractérisée en ce que** les polymères présentent un point d'inflammation de plus de 61°C.
